# EUROPEAN PATENT SPECIFICATION

(11) **EP 3 218 466 B1**
(45) Date of publication and mention of the grant of the patent: **24.04.2019**
(21) Application number: 15794578.3
(22) Date of filing: 13.11.2015
(51) Int. Cl.: C12C 3/12, C12C 3/00

(54) **PROCESS FOR PRODUCING A BREWED BEVERAGE OR FOR ISOMERISING ALPHA ACIDS**
VERFAHREN ZUR HERSTELLUNG EINES FERMENTIERTEN GETRÄNKS ODER ZUM ISOMERISIEREN VON ALPHA-SÄUREN
PROCÉDÉ DE PRODUCTION D'UNE BOISSON FERMENTÉE OU POUR ISOMERISER DES ACIDES ALPHA

(30) Priority: 13.11.2014 EP 14193103
(43) Date of publication of application: 20.09.2017
(73) Proprietor: Ifast NV, 1760 Roosdaal (BE)
(72) Inventor: MERTENS, Pascal, B-1760 Roosdaal (BE)
(74) Representative: V.O.
(86) International application number: PCT/EP2015/076601
(87) International publication number: WO 2016/075308

(56) References cited:
- WO-A1-2011/135032
- WO-A1-2012/041994
- US-A- 3 952 061
- HORST KÖLLER: "MAGNESIUM ION CATALYSED ISOMERIZATION OF HUMULONE: A NEW ROUTE TO PURE ISOHUMULONES*", JOURNAL OF THE INSTITUTE OF BREWING, vol. 75, no. 2, 4 March 1969 (1969-03-04), pages 175-179, XP055175714, ISSN: 0046-9750, DOI: 10.1002/j.2050-0416.1969.tb03197.x

## Description

### FIELD OF THE INVENTION

The present invention relates to a method for producing a brewed beverage, preferably for brewing a beer, and in particular to a method to improve the utilization of alpha-acids in the brewing process.

The present invention further relates to a method for isomerizing alpha-acids to iso-alpha-acids.

### BACKGROUND OF THE INVENTION

Hops are used in the beer brewing process, generally by addition to the (boiling) wort in the brew kettle, for various purposes. The added alpha-acids (main analogues are humulone, cohumulone and adhumulone; the alpha-acids are also collectively known as humulones) are the precursors of the bitter beer taste (*i.e.* the iso-alpha-acids or isohumulones), the beta-acids (also called lupulones; with as principal analogues lupulone, colupulone and adlupulone) are bacteriostatic agents, and the oils can provide the 'hoppy' aroma to beer.

In the conventional brewing process, the alpha-acids are partially extracted from the added hops (*e.g.* in the form of hop pellets or hop extracts) and dissolved in the (boiling) wort medium, and partially isomerized into the bitter iso-alpha-acids (also called isohumulones; mainly the cis- and trans-isomers of isohumulone, isocohumulone and isoadhumulone) during the wort boiling stage of the brewing process.

Given the alpha-acids' pKa values (5.5 for humulone, 4.7 for cohumulone and 5.7 for adhumulone) and the typical pH value of (boiling) wort (5 - 5.5), only a fraction of the added alpha-acids (typically about 50 % under conventional (lager) wort boiling conditions) actually dissolves in the (boiling) wort medium, while only dissolved alpha-acids readily isomerize into iso-alpha-acids (Briggs et al., Brewing Science and Application (2004) 287, Woodhead Publishing Limited, Cambridge England).

Typically, at the end of the wort boiling stage *(e.g.* after a 60 min boiling time), the yield of iso-alpha-acids (from the isomerization of the added alpha-acids) is about 40 to 45 %. After the wort boiling stage, a fraction of the formed iso-alpha-acids is lost in subsequent stages of the brewing process because of *i.a.* association to the yeast during the fermentation stage, lower solubility at lower pH values (pH value of final beer typically in the range of 4 - 4.5), adsorption during beer filtration, *etc.* Typically, the alpha-acid utilization (the percentage of iso-alpha-acids in the beer versus the amount of alpha-acids added to the (boiling) wort) in conventional brewing is about 30 %.

One option to improve the bittering utilization of alpha-acids in beer brewing, for which multiple methods have been introduced, is based on the (partial) isomerization of alpha-acids at the brewing site, separate from the wort boiling process (in the brew kettle).

EP-A 2,227,535 introduces a method involving an aqueous process for isomerization of alpha-acids, separate from the wort boiling, at high temperature (120 °C and higher) to isomerize at least a fraction of the alpha-acids into iso-alpha-acids, prior to the addition of the obtained aqueous mixture to the (boiling) wort.

EP-A 2,699,336 applies a similar method, also separate from the wort boiling and at high temperature (> 120 °C), but the processing of the alpha-acids also involves the generation of aqueous emulsions of alpha-acids in a highpressure apparatus (> 100 bar).

Applying such high processing temperatures for the isomerization of alpha-acids into iso-alpha-acids however results in beers with altered flavor profiles and undesirable off-flavours and requires special (high pressure) processing equipment.

EP-A 2,215,207 introduces a method describing a brewing process involving the mixing of hop pellets (containing alpha-acids) with MgO for isomerization of alpha-acids at increased temperature in an aqueous processing medium in a separate stirred tank, prior to the addition of the obtained aqueous mixture to the (boiling) wort.

However, by applying this method, magnesium - isohumulates and also magnesium - humulates (being a remaining non-isomerized fraction of alpha-acids, because of incomplete alpha-acid isomerization) with a low solubility in the aqueous processing medium and in the wort medium are obtained, which limits the bittering utilization upon addition to the (boiling) wort, because of the poor extraction and dissolution into the (boiling) wort medium.

Applying such methods based on the (partial) isomerization of humulones at the brewing site separate from the wort boiling in the brew kettle and prior to the addition to the (boiling) wort, can improve the alpha-acid utilization up to the 40 % level.

Another approach to improve the bittering utilizations of alpha-acids is the (partial) isomerization of the alpha-acids present in hop pellets (EP 0,311,330) or hop extracts (EP 0,672,107) into iso-alpha-acids outside the brewery site prior to the addition of the hop pellets or hop extracts to the (boiling) wort during the brewing process.

The addition of *e*.*g*. isomerized hop extracts (containing iso-alpha-acids, usually also containing beta-acids and hop oils) to the (boiling) wort in the brew kettle usually results in iso-alpha-acid utilizations (the percentage of iso-alpha-acids in the beer versus iso-alpha-acids added to the wort) of about 45 %.

During the production of such isomerized hop extracts (generally involving an aqueous isomerization process using the combination of an alkaline earth metal salt (*e.g.* MgSO₄) and an alkali metal base *(e.g.* KOH) for multiple hours at high temperature followed by a separation process involving an acidification step, typically with an inorganic acid (*e.g.* H₂SO₄, after cooling). However, about 10 % of the formed iso-alpha-acids is lost as a consequence of by-product formation (caused by hydrolysis) and incomplete recovery of the iso-alpha-acids during the acidification step (to remove the alkaline earth metal and the alkali metal species, and to obtain iso-alpha-acids in the free acid form), which thus implies an actual total alpha-acid utilization of about 40 % applying such isomerized hop products, such as for example isomerized hop extracts (also called isomerized kettle extracts). US 3,952,061 describes a process for the preparation of iso-alpha-acid products from alpha-acids in the presence of metal salts (*e.g*. magnesium chloride or magnesium sulphate) in a basic (by addition of an alkali metal base) liquid medium comprising a mixture of a water miscible organic solvent (such as ethanol, in which (iso)humulones readily dissolve) and water. As shown in the Examples, the humulone is first dissolved in the organic solvent, to which a solution of the metal salt in water is next added. After the isomerization process, additional processing steps are required to recover the isohumulone and to obtain the isohumulone product from the process mixture (with typically the organic solvent as the major solvent), such as acidification (to a pH of 2), followed by isohumulone extraction (with an organic solvent, for example ether) and solvent evaporation.

The present invention intends to address the above-cited limitations of the prior art, by providing an effective (brewing) innovation. It is an object of the present invention to provide a new brewing method, which does not require high processing temperatures (of 120 °C or higher) or the use of organic solvents for the alpha-acid pre-isomerization process, whilst having satisfactory, preferably improved, alpha-acid utilizations in brewing. It is a further object to provide such a method wherein the formed iso-alpha-acids added during the brewing process, typically to the (boiling) wort, are in a readily dissolving form in acidic aqueous media, in particular in a form readily dissolving in the (boiling) wort medium.

### DESCRIPTION OF THE INVENTION

It was found that the alpha-acid isomerization processing as such and the alpha-acid utilization in brewing can be improved by combining metal catalysis such as alkaline earth metal catalysis (using metal cations such as alkaline earth metal cations) and metal complexation (using chelating agents) for the alpha-acid isomerization in aqueous conditions.

It was found that applying an aqueous process for (partial) isomerization of alpha-acids (introduced in the form of an alpha-acids containing matter such as hop pellets or hop extracts), as part of a brewing process, typically comprising a wort boiling stage (or wort processing stage) and a fermentation stage, but separate from the wort boiling or processing (in the brew kettle), using complexes (one type or more than one type) of (alkaline earth) metal cations with charge > +1, for example +2 or +3, and chelating agents, for example magnesium glycinate or calcium glycinate, followed by the direct or indirect addition of the obtained aqueous process mixture, optionally further processed, to the (boiling) wort, can improve the alpha-acid utilization compared to a brewing process comprising an analogous aqueous alpha-acid isomerization process using alkaline earth metal cations, separate from the wort boiling (or wort processing), carried out in the absence of chelating agents other than the introduced hop acids (or other hop substances) with chelating properties (as in EP-A 2,215,207), or compared to a brewing process not comprising an (aqueous) alpha-acid isomerization process separate from the wort boiling (or processing). These complexes (for example magnesium glycinate) of (alkaline earth) metal cations, such as Mg²⁺, and chelating agents, such as glycine, can be introduced as such to the aqueous medium for the alpha-acid isomerization, or can be formed in-situ (in the aqueous medium (to be) applied for the alpha-acid isomerization, optionally further processed), for example by contacting (alkaline earth) metal cations (for example Mg²⁺ introduced as MgO or a Mg salt such as magnesium carbonate) with chelating agents (for example glycine, lysine or potassium glycinate). It is our understanding that in the aforementioned aqueous process for (partial) isomerization of alpha-acids, the alpha-acid isomerization is catalysed by (the presence of) complexes of (alkaline earth) metal cations and chelating agents, and that the formation (and precipitation) of magnesium - (iso)humulates is at least reduced in the aqueous process mixture. The aqueous mixture containing the iso-alpha-acid products can be added directly during the brewing process, typically to the (boiling) wort, *i.e.* without further processing, or the aqueous mixture containing the iso-alpha-acid products can be added indirectly, *i.e.* first be further processed, *e.g*. concentrated, diluted or subjected to a fractionation step. It is in particular an advantage of the present invention that the aqueous mixture comprising the iso-alpha-acid can be added to (boiling) wort without having been subjected to a prior acidification step (to a pH of less than 5). Preferably, in a method of the present invention for brewing a beer, the aqueous mixture comprising the iso-alpha-acid is added to the wort without any acidification step.

It was also found that the aqueous alpha-acid isomerization process itself, optionally as part of a brewing process, and usually starting from an alpha-acids containing matter such as hop extracts (or hop pellets), can be improved by using (one type or more than one type) complexes of (alkaline earth) metal cations and chelating agents for the isomerization of alpha-acids into iso-alpha-acids.

It was found during a brewing test series that by adding an aqueous mixture, obtained by contacting hop pellets, containing alpha-acids, with magnesium glycinate (equimolar amounts of alpha-acids and magnesium glycinate) in an aqueous medium (2 weight% alpha-acids) and keeping the processing temperature at 90 °C for 30 min (which resulted in an iso-alpha-acid yield of > 95 %), to a (boiling) wort 15 min prior to the end of the wort boiling, alpha-acid utilizations of 45 % and higher were achieved. In the control series, with addition of hop pellets containing alpha-acids to the wort or with a pre-isomerization process (separate from the wort boiling process) performed as described in EP-A 2,215,207 (processing conditions: molar ratio MgO to alpha-acid 1.8 : 1, temperature 90 °C, time 30 min), alpha-acid utilizations of respectively about 30 % (no alpha-acid pre-isomerization; addition 60 min prior to the end of wort boiling) and below 40 % (alpha-acid pre-isomerization with MgO; addition 15 min prior to the end of wort boiling) were obtained. In the pre-isomerization process using magnesium glycinate, no formation of a separate phase containing magnesium - (iso)humulates was observed in the aqueous process medium. It was found that in the brewing process performed as described in EP-A 2,215,207, the iso-alpha-acid yield in the alpha-acid pre-isomerization process obtained in the test series was below 80 % and a precipitating phase of hardly dissolvable magnesium - isohumulates was formed in the aqueous process medium. Similar observations were made in the case hop extracts were applied instead of hop pellets as alpha-acids containing matter. Similar results were obtained in the case other complexes of (alkaline earth) metal cations and chelating agents were used, such as magnesium lysinate, magnesium phosphate tribasic, calcium glycinate, *etc.*

It was also found that by adding an aqueous mixture, obtained by adding hop extract containing alpha-acids (2 weight% alpha-acids added) to an aqueous medium in which basic magnesium carbonate was contacted with glycine (to form magnesium glycinate complexes in-situ, molar ratio of magnesium carbonate : glycine 1 : 2), applying an initial molar ratio of magnesium to alpha-acid of 1 : 1, and keeping the processing temperature at 90 °C for 30 min (which resulted in an iso-alpha-acid yield of > 95 %), to a (boiling) wort 15 min prior to the end of wort boiling, alpha-acid utilizations above 45 % could be achieved.

It was also found that by adding an aqueous mixture, obtained by adding hop extract containing alpha-acids (2 weight% alpha-acids added) to an aqueous medium in which magnesium carbonate and potassium glycinate were contacted (to form magnesium glycinate, molar ratio of magnesium carbonate to potassium glycinate of 1 : 2), applying an initial molar ratio of magnesium to alpha-acid of 1 : 1, and keeping the processing temperature at 90 °C for 30 min (which resulted in an iso-alpha-acid yield of > 95 %), to a (boiling) wort 15 min prior to the end of wort boiling, alpha-acid utilizations of about 50 % could be achieved. An alpha-acid utilization improvement above 45 % was obtained when potassium citrate or potassium phosphate was used instead of potassium glycinate as the chelating agent.

It was thus found that by combining (alkaline earth) metal catalysis and metal complexation (with chelating agents) in an aqueous process for (partial) alpha-acid isomerization to iso-alpha-acids, as part of a brewing process, typically comprising a wort boiling (or processing) stage and a fermentation stage, but separate from the wort boiling (or processing) (in the brew kettle), the alpha-acid utilization can be improved to the 45 - 50 % level, compared to the typical alpha-acid utilization for alpha-acid additions to the (boiling) wort of about 30 %.

Accordingly, the invention relates to a method for preparing a brewed beverage, in particular for brewing a beer, comprising an aqueous process for (partial) isomerization of alpha-acids (introduced in the form of an alpha-acids containing matter, comprising alpha-acids for example in the free acid form or as alkali metal salts, or combinations thereof) to iso-alpha-acids, separate from the wort boiling in the brew kettle, using one type or more than one type of complexes of metal cations, preferably alkaline earth metal cations, with charge > +1 and chelating agents with charge > +1 and chelating agents selected from the group of amino acids including salts thereof in an aqueous processing medium wherein the alpha-acid isomerization is carried out comprising at least a 60 volume% water fraction of the total solvent volume, thereby preparing an aqueous mixture comprising iso-alpha-acids to be added during the brewing process . The invention also relates to the aforementioned method further comprising the addition of the obtained aqueous mixture (from the aforementioned aqueous process) comprising iso-alpha-acids, optionally further processed, during the brewing process (for example before or after the fermentation stage), typically to the wort (for example prior to the boiling of the wort, or during the boiling of the wort, or after the boiling of the wort).

The invention further relates to a method for isomerizing alpha-acids to iso-alpha-acids, comprising an aqueous process using one type or more than one type of complexes of metal cations, preferably alkaline earth metal cations, with charge > +1. and chelating agents selected from the group of amino acids including salts thereof, wherein the alpha-acid isomerization is carried out in an aqueous processing medium comprising at least a 60 volume% water fraction of the total solvent volume. The alpha-acids may be introduced in the form of an alpha-acids containing matter, comprising alpha-acids for example in the free acid form or as alkali metal salts, or combinations thereof.

In a method for preparing a brewed beverage or for isomerizing alpha acids according to the invention, said complexes can be of one type or more than one type; said metal cations can be of one type or more than one type; said chelating agents can be of one type or more than one type.

The term 'complex' should be understood in the meaning of a chemical substance formed by the combination of other chemical substances and held together by forces that are chemical rather than physical. Examples of complexes of alkaline earth metal cations with charge > +2 and chelating agents are magnesium and calcium glycinate complexes, magnesium and calcium lysinate complexes, magnesium phosphate complexes and magnesium citrate complexes. These complexes of alkaline earth metal ions and chelating agents can have for example the form of salts or chelates.

The term 'chelating agent' should be understood in the meaning of a chemical substance that can form several bonds to a single metal cation with charge > +1, for example via its 0 atoms, N atoms or S atoms. Examples of chelating agents are glycine, L-lysine, citric acid, phosphoric acid, gluconic acid, *etc.*

One type of alpha-acids can be for example only humulone, or only cohumulone, or only adhumulone, *etc.* More than one type of alpha-acids can be any combination of alpha-acids, for example combinations of humulone, cohumulone and adhumulone.

One type of (alkaline earth) metal cations can be for example only Mg²⁺, or only Ca²⁺, or only another type of metal cation (thus with charge > +1, for example +2 or +3). More than one type of (alkaline earth) metal cations can be any combination of (alkaline earth) metal cations, for example a combination of Mg²⁺ and Ca²⁺.

One type of chelating agents means that they all have the same chemical structural formula. Thus one type of this chemical substance can be for example only glycine, or only potassium glycinate, or only L-lysine, or only (tri)potassium citrate, or only tripotassium phosphate, *etc.* More than one type of chelating agents can be any combination of chelating agents, for example glycine and potassium glycinate, or glycine, L-lysine and potassium glycinate, *etc.*

One type of complexes means a complex of one type of (alkaline earth) metal cation and one type of chelating agent. More than one type of complexes means that there are complexes differing from each other in that they contain a different type of (alkaline earth) metal cations and/or a different type of chelating agents.

The metal cation with charge > +1, for example +2 or +3, is usually selected from the group consisting of magnesium cations, calcium cations, strontium cations, barium cations, iron cations, copper cations, aluminium cations, manganese cations and zinc cations. It is understood that list is not limitative. Other metal cations that can be used in particular include other metal cations with a charge > +1. Preferred alkaline earth metal cations are Mg²⁺ and Ca²⁺. If a combination of (alkaline earth) metal cations is used, preferably at least one is Mg²⁺. The Mg²⁺ fraction is more preferably 50 to 100 mol% based on the total of the (alkaline earth) metal cations present (as complexes with chelating agents) in the isomerization process medium.

The chelating agent is selected from the group of amino acids including salts thereof , *e.g.* glycine and L-lysine, and other L-amino acids. with chelating properties. An example of a salt derivative of an amino acid is potassium glycinate. It is understood that this list is not limitative. As will be understood by the skilled person, 'salt derivatives' means salts of the chelating agent in ionized form and counter ion(s), preferably salts of the chelating agent in anionic form (*e.g.* glycinate) with alkali metal counter cations, for example K⁺ or Na⁺, preferably K⁺. In particular, good results have been achieved with glycine and potassium glycinate. If more than one type of chelating agents is used, at least one of the chelating agents is an amino acid, more preferably at least 50 mol% of the total of chelating agents is formed by one or more amino acids.

The alpha-acids containing matter (comprising alpha-acids for example in the free acid form or as alkali metal salts, or combinations thereof) is usually selected from the group consisting of hop cones, raw hops, dried hops, baled hops, milled hops, powdered hops, hop pellets, hop extracts, hop extracts containing alpha-acids and beta-acids, hop extracts containing apart from alpha-acids also hop oils, purified alpha-acid extracts, alpha-acid concentrates and aqueous solutions comprising alpha-acids. It is understood that this list is not limitative. Preferred alpha-acids containing matters are hop pellets, hop extracts and alpha-acid concentrates.

For the aqueous process for (partial) isomerization of alpha-acids, separate from the wort boiling or wort processing (in the brew kettle), optionally as part of a method for preparing a brewed beverage, in particular for brewing a beer, according to the present invention, summed contents of alpha-acids and iso-alpha-acids (at the start of the process predominantly alpha-acids, and at the end of the process mainly iso-alpha-acids) in the aqueous processing medium (during the isomerization process) of at least 0.1 weight% are preferred, of at least 0.5 weight% are more preferred, of at least 1.0 weight% are most preferred, and of at least 2.0 weight% are particularly preferred. Usually, the summed contents of alpha-acids and iso-alpha-acids in the aqueous processing medium (during the isomerization process) are below 60.0 weight%, preferably below 40.0 weight%, more preferably below 20.0 weight%, most preferably below 10.0 weight%.

For the aqueous process for (partial) isomerization of alpha-acids using complexes of (alkaline earth) metal cations and chelating agents (complexes introduced as such or formed in-situ by contacting (alkaline earth) metal substances, such as oxides or salts, with chelating agents), separate from the wort boiling (or wort processing) (in the brew kettle), optionally as part of a method for preparing a brewed beverage, in particular for brewing a beer, according to the present invention, usually the molar ratio of complex (on (alkaline earth) metal basis) of (alkaline earth) metal cation and chelating agent to (alpha-acid + iso-alpha-acid) is between 20 : 1 and 1 : 20 in the aqueous processing medium. Molar ratios of complex (on (alkaline earth) metal basis) of (alkaline earth) metal cation to (alpha-acid + iso-alpha-acid) between 10 : 1 and 1 : 10 are preferred, between 5 : 1 and 1 : 5 are more preferred, and between 2 : 1 and 1 : 2 are most preferred.

For the aqueous process for (partial) isomerization of alpha-acids, separate from the wort boiling (or wort processing) (in the brew kettle), optionally as part of a method for preparing a brewed beverage, in particular for brewing a beer, according to the present invention, usually the molar ratio of (alkaline earth) metal cation to chelating agent is between 20 : 1 and 1 : 20 in the aqueous processing medium. Molar ratios of (alkaline earth) metal cation to chelating agent between 10 : 1 and 1 : 10 are preferred, between 5 : 1 and 1 : 5 are more preferred, and between 3 : 1 and 1 : 3 are most preferred.

For the aqueous process for (partial) isomerization of alpha-acids, separate from the wort boiling (or wort processing) (in the brew kettle), optionally as part of a method for preparing a brewed beverage, in particular for brewing a beer, according to the present invention, usually the molar ratio of (alkaline earth) metal cation to (alpha-acid + iso-alpha-acid) is between 20 : 1 and 1 : 20 in the aqueous processing medium. Molar ratios of (alkaline earth) metal cation to (alpha-acid + iso-alpha-acid) between 10 : 1 and 1 : 10 are preferred, between 5 : 1 and 1 : 5 are more preferred, and between 2 : 1 and 1 : 2 are most preferred.

For the aqueous process for (partial) isomerization of alpha-acids, separate from the wort boiling (or wort processing) (in the brew kettle), optionally as part of a method for preparing a brewed beverage, in particular for brewing a beer, according to the present invention, usually (purified) water or other aqueous media are used as the processing medium. Optionally, another solvent (such as ethanol) or solvent mixtures can be added to the aqueous medium.The aqueous processing medium comprises at least a 60 volume% water fraction of the total solvent volume, more preferably at least an 80 volume% water fraction of the total solvent volume, most preferably at least a 95 volume% water fraction of the total solvent volume. Optionally, alkaline substances (*e*.*g*. potassium hydroxide) can be added to the aqueous processing medium to increase its pH value. pH values of the aqueous processing medium between 7 and 12 are preferred, between 7.5 and 11 more preferred, and between 8 and 10 most preferred.

For the aqueous process for (partial) isomerization of alpha-acids, separate from the wort boiling (or wort processing) (in the brew kettle), optionally as part of a method for preparing a brewed beverage, in particular for brewing a beer, according to the present invention, usually processing temperatures (for the isomerization process) in the range of 278 K to 388 K are applied. Temperatures in the range of 323 K to 378 K are preferred, in the range of 333 K to 373 K are more preferred, in the range of 343 K to 368 K are most preferred, and temperatures in the range of 348 K to 363 K are particularly preferred.

For the aqueous process for (partial) isomerization of alpha-acids, separate from the wort boiling (or wort processing) (in the brew kettle), optionally as part of a method for preparing a brewed beverage, in particular for brewing a beer, according to the present invention, usually processing times (for the isomerization process) in the range of 1 min to 480 min are applied. Processing times in the range of 5 min to 120 min are preferred, in the range of 10 to 90 min are more preferred, in the range of 15 min to 60 min are even more preferred, and in the range of 20 min to 40 min are particularly preferred.

For the aqueous process for (partial) isomerization of alpha-acids, separate from the wort boiling (or wort processing) (in the brew kettle), optionally as part of a method for preparing a brewed beverage, in particular for brewing a beer, according to the present invention, usually processing conditions (for the alpha-acid isomerization process) are applied that allow iso-alpha-acid yields (at the end of the aqueous process for isomerization of alpha-acids) of at least 40 %, preferably of at least 60 %, more preferably of at least 80 %, most preferably of at least 90 %.

The aqueous alpha-acid isomerization process according to the present invention can be carried out in equipment know *per se.* In a specific embodiment, the process is carried out in a (continuously) stirred tank reactor. In a further embodiment, the process is carried out in a pump flow reactor.

After the aqueous process for (partial) isomerization of the alpha-acids to iso-alpha-acids, separate from the wort boiling (or wort processing) (in the brew kettle), as part of a method for preparing a brewed beverage, in particular for brewing a beer, according to the present invention, the direct or indirect iso-alpha-acid addition (using the aqueous mixture, comprising iso-alpha-acids, from the aforementioned aqueous process, optionally further processed) during the brewing process, in particular to the wort, is usually between 1 mg/L ((unfermented) wort or (fermented) beverage) and 200 mg/L ((unfermented) wort or (fermented) beverage), typically between 2 mg/L ((unfermented) wort or (fermented) beverage) and 150 mg/L ((unfermented) wort or (fermented) beverage), preferably between 4 mg/L ((unfermented) wort or (fermented) beverage) and 100 mg/L ((unfermented) wort or (fermented) beverage), more preferably between 6 mg/L ((unfermented) wort or (fermented) beverage) and 75 mg/L ((unfermented) wort or (fermented) beverage), most preferably between 10 mg/L ((unfermented) wort or (fermented) beverage) and 60 mg/L ((unfermented) wort or (fermented) beverage). The addition of iso-alpha-acids is achieved by addition of the obtained aqueous mixture, comprising iso-alpha-acids, from the aforementioned aqueous process, optionally further processed, during the brewing process, typically to the (boiling) wort contained in the brew kettle but the obtained aqueous mixture, optionally further processed, can also be added to the wort after the wort boiling stage, for example to a wort in the whirlpool or to a wort stream, or can even be added further downstream in the brewing process, for example post-fermentation to a fermented beverage volume. In particular, it is preferred to add at least part of the aqueous mixture containing the iso-alpha-acids to the (unfermented) wort, preferably 50 - 100 weight%, more preferably 80 - 100 weight%; the balance, if any, may be added to the (fermented) beverage. The addition of the aqueous mixture, comprising iso-alpha-acids, optionally further processed, to a boiling wort (in the brew kettle), is preferably performed at least 5 min prior to the end of the wort boiling, more preferably at least 10 min prior to the end of the wort boiling, most preferably at least 15 min prior to the end of the wort boiling.

For the purpose of clarity and a concise description, features are described herein as part of the same or separate embodiments, however, it will be appreciated that the scope of the invention may include embodiments having combinations of some or all of the features described.

### EXAMPLES

### Example 1.

The alpha-acid isomerization and brewing processes in this Example were performed in duplicate. In this Example, the alpha-acid contents of the alpha-acids containing matters were 50 weight% for the hop extract, and 10 weight% for the hop pellets.

Alpha-acid isomerization process 1: To 1.9 g of magnesium glycinate (as magnesium bisglycinate) in 200 g H₂O at 363 K was added 8 g of hop extract (containing 4 g of alpha-acids) in a vessel (corresponding to an initial molar ratio of magnesium glycinate (on Mg basis) to alpha-acid of 1 : 1). Next, the aqueous mixture was stirred and kept at 363 K for 30 min, which resulted in an iso-alpha-acid yield of > 99 %. The same iso-alpha-acid yield was also obtained with 0.95 g of magnesium glycinate, thus with an initial molar ratio of magnesium glycinate (on Mg basis) to alpha-acid of 0.5 : 1.

Alpha-acid isomerization process 2: To 1.9 g of magnesium glycinate in 200 g H₂O at 363 K was added 40 g of hop pellets (containing 4 g of alpha-acids) in a vessel (corresponding to an initial molar ratio of magnesium glycinate (on Mg basis) to alpha-acid of 1 : 1). Next, the aqueous mixture was stirred and kept at 363 K for 30 min, which resulted in an iso-alpha-acid yield of > 99 %.

Alpha-acid isomerization process 3 (Reference Example): To 0.8 g of magnesium oxide in 200 g H₂O at 363 K was added 40 g of hop pellets (containing 4 g of alpha-acids) in a vessel (corresponding to an initial molar ratio of magnesium oxide to alpha-acid of 1.8 : 1). Next, the aqueous mixture was stirred and kept at 363 K for 30 min, which resulted in an iso-alpha-acid yield of 76 %.

Alpha-acid isomerization process 4: To 0.45 g of magnesium oxide and 1.7 g of glycine (corresponding to an initial molar ratio of magnesium oxide to glycine of 1 : 2, to form magnesium glycinate complexes in-situ) mixed in 200 g H₂O for 30 min was added 8 g of hop extract (containing 4 g of alpha-acids) in a vessel (corresponding to an initial molar ratio of magnesium to alpha-acid of 1 : 1). Next, the aqueous mixture was stirred and kept at 363 K for 30 min, which resulted in an iso-alpha-acid yield of > 99 %.

Alpha-acid isomerization process 5: To 0.9 g of magnesium carbonate and 2.5 g of potassium glycinate (corresponding to an initial molar ratio of magnesium carbonate to potassium glycinate of 1 : 2, to form in-situ magnesium glycinate complexes) mixed in 200 g H₂O for 30 min was added 8 g of hop extract (containing 4 g of alpha-acids) in a vessel (corresponding to an initial molar ratio of magnesium to alpha-acid of 1 : 1). Next, the aqueous mixture was stirred and kept at 363 K for 30 min, which resulted in an iso-alpha-acid yield of > 99 %.

Alpha-acid isomerization process 6: To 0.9 g of magnesium carbonate and 3.4 g of tripotassium citrate (corresponding to an initial molar ratio of magnesium carbonate to potassium citrate of 1 : 1, to form in-situ magnesium citrate complexes) mixed in 200 g H₂O for 30 min was added 8 g of hop extract (containing 4 g of alpha-acids) in a vessel (corresponding to an initial molar ratio of magnesium to alpha-acid of 1 : 1). Next, the aqueous mixture was stirred and kept at 363 K for 30 min, which resulted in an iso-alpha-acid yield of > 99 % for the alpha-acid isomerization process. The same iso-alpha-acid yield was obtained by substitution of tripotassium citrate with 2.4 g of tripotassium phosphate.

Next, the obtained aqueous mixtures, from alpha-acid isomerization processes 1 - 6, were entirely added to separate 100 L boiling lager wort volumes (start pH 5.4), prepared from lager malt, which corresponds to (alpha-acid + iso-alpha-acid) additions of 40 mg/L (wort). The wort was in each case boiled for 15 min after the addition of the aqueous mixtures.

After the wort boiling, the wort was cooled to 285 K. Thereafter, the cooled wort was pitched with lager yeast, fermented at 285 K, cooled to 273 K, centrifuged and stored at 283 K.

A 100 mL volume of cold beer was taken in each case after 3 days of storage, and kept in a closed brown-glass bottle at 283 K for 3 h, prior to HPLC analysis of the cold beer sample, with UV detection of the iso-alpha-acids at 256 nm.

The addition of the aqueous mixture from alpha-acid isomerization process 1 (using hop extract and magnesium glycinate) led to an iso-alpha-acid concentration of 18.9 mg/L in the cold beer, which corresponds to an alpha-acid utilization of 47.3 %.

The addition of the aqueous mixture from alpha-acid isomerization process 2 (using hop pellets and magnesium glycinate) led to an iso-alpha-acid concentration of 19.7 mg/L in the cold beer, which corresponds to an alpha-acid utilization of 49.3 %.

The addition of the aqueous mixture from alpha-acid isomerization process 3 (using hop pellets and MgO) led to an iso-alpha-acid concentration of 14.7 mg/L in the cold beer, which corresponds to an alpha-acid utilization of 36.8 %.

The addition of the aqueous mixture from alpha-acid isomerization process 4 (using hop extract, magnesium oxide and glycine) led to an iso-alpha-acid concentration of 18.3 mg/L in the cold beer, which corresponds to an alpha-acid utilization of 45.8 %.

The addition of the aqueous mixture from alpha-acid isomerization process 5 (using hop extract, magnesium carbonate and potassium glycinate) led to an iso-alpha-acid concentration of 19.9 mg/L in the cold beer, which corresponds to an alpha-acid utilization of 49.8 %.

The addition of the aqueous mixture from alpha-acid isomerization process 5 (using hop extract, magnesium carbonate and potassium citrate) led to an iso-alpha-acid concentration of 18.1 mg/L in the cold beer, which corresponds to an alpha-acid utilization of 45.2 %.

## Claims

1. Method for preparing a brewed beverage, in particular a beer, comprising an aqueous process for isomerization of alpha-acids to iso-alpha-acids from an alpha-acids containing matter, separate from the wort boiling in the brew kettle, using one type or more than one type of complexes of metal cations, preferably alkaline earth metal cations, with charge > +1 and chelating agents selected from the group of amino acids including salts thereof in an aqueous processing medium wherein the alpha-acid isomerization is carried out comprising at least a 60 volume% water fraction of the total solvent volume, thereby preparing an aqueous mixture comprising iso-alpha-acids to be added during the brewing process.

2. Method according to claim 1, wherein said aqueous processing medium comprises at least a 95 volume% water fraction of the total solvent volume.

3. Method according to claim 1 or 2, further comprising the direct or indirect addition of said aqueous mixture, optionally further processed prior to the addition, during the brewing process before or after the fermentation stage, in particular to the wort, prior to the boiling of the wort, or during the boiling of the wort, or after the boiling of the wort.

4. Method according to any of the claims 1 - 3, wherein said aqueous mixture is added during the brewing process without having been subjected to an acidification step to a pH of less than 5 prior to the addition during the brewing process, preferably without having been subjected to any acidification step.

5. Method according to any of the claims 1 - 4, wherein between 4 mg/L and 100 mg/L wort of iso-alpha-acids are added during the brewing process, preferably to the unfermented wort.

6. Method according to any of the claims 1 - 4 wherein between 4 mg/L and 100 mg/L fermented beverage of iso-alpha-acids are added during the brewing process.

7. Method for isomerizing alpha-acids, from an alpha-acids containing matter, to iso-alpha-acids, comprising an aqueous process using one type or more than one type of complexes of metal cations, preferably alkaline earth metal cations, with charge > +1 and chelating agents selected from the group of amino acids including salts thereof, wherein the alpha-acid isomerization is carried out in an aqueous processing medium comprising at least a 60 volume% water fraction of the total solvent volume.

8. Method according to any of the claims 1 - 7, wherein the summed content of alpha-acids and iso-alpha-acids in the aqueous processing medium for the alpha-acid isomerization is at least 0.1 weight% and preferably between 0.5 weight% and 40.0 weight%.

9. Method according to any of the claims 1 - 8, wherein the molar ratio of complex of metal cation and chelating agent, on metal basis, to (alpha-acid + iso-alpha-acid) in the aqueous processing medium for the alpha-acid isomerization is between 20 : 1 and 1 : 20.

10. Method according to any of the claims 1 - 9, wherein the molar ratio of metal cation to chelating agent in the aqueous processing medium for the alpha-acid isomerization is between 20 : 1 and 1 : 20.

11. Method according to any of the claims 1 - 10, wherein the processing temperature for the alpha-acid isomerization process is in the range of 323 K to 368 K and wherein the processing time for the alpha-acid isomerization process is in the range of 1 min to 120 min.

12. Method according to any of the claims 1 - 5 and 7 - 11, comprising the direct or indirect addition of one type or more than one type of complexes of metal cations and chelating agents to wort.

13. Method according to any of the preceding claims, wherein the metal cation with charge > +1 is selected from the group consisting of magnesium cations, calcium cations, strontium cations, barium cations, iron cations, copper cations, aluminium cations, manganese cations and zinc cations.

14. Method according to claim 13, wherein said metal cation is Mg²⁺.

15. Method according to any of the claims 1 - 14, wherein glycine is used as chelating agent.

16. Method according to any of the claims 1 - 14, wherein glycinate, in particular potassium glycinate, is used as chelating agent.

17. Method according to any of the claims 1-14, wherein an L-amino acid is used as chelating agent, in particular L-lysine.

18. Method according to any of the claims 1 - 17, wherein the alpha-acids containing matter, comprising alpha-acids in the free acid form or as alkali metal salts, or combinations thereof, is selected from the group consisting of hop cones, raw hops, dried hops, baled hops, milled hops, powdered hops, hop pellets, hop extracts, hop extracts containing alpha-acids and beta-acids, hop extracts containing apart from alpha-acids also hop oils, purified alpha-acid extracts, alpha-acid concentrates and aqueous solutions comprising alpha-acids.

19. Method according to any of the claims 1 - 18, wherein the alpha-acids containing matter is not added to the aqueous processing medium for the alpha-acid isomerization as an organic solvent solution comprising alpha-acids.

20. Method according to claims 1 - 19, wherein the aqueous alpha-acid isomerization process is carried out in a stirred tank reactor.

21. Method according to claims 1 - 19, wherein the aqueous alpha-acid isomerization process is carried out in a pump flow reactor.

22. Method according to claims 1 - 21, comprising the direct or indirect addition of alkali metal substances to the aqueous processing medium.

## Patentansprüche

1. Verfahren zur Herstellung eines gebrauten Getränkes, insbesondere eines Bieres, umfassend einen wässrigen Prozess zur Isomerisierung von Alpha-Säuren zu Iso-Alpha-Säuren aus einer Alpha-Säuren enthaltenden Substanz, getrennt von dem Würzekochen im Braukessel, unter Verwendung einer Art oder mehr als einer Art von Komplexen von Metallkationen, vorzugsweise Erdalkalimetallkationen, mit einer Ladung von > +1 und Chelatbildnern, ausgewählt aus der Gruppe von Aminosäuren, einschließlich Salzen davon, in einem wässrigen Verarbeitungsmedium, wobei die Isomerisierung der Alpha-Säure durchgeführt wird, umfassend mindestens einen 60 Vol.-% Wasseranteil des gesamten Lösungsmittelvolumens, dadurch Herstellen einer wässrigen Mischung, umfassend die Iso-Alpha-Säuren, die während des Brauprozesses zugegeben werden.

2. Verfahren nach Anspruch 1, wobei das wässrige Verarbeitungsmedium mindestens 95 Vol.-% Wasseranteil des gesamten Lösungsmittelvolumens umfasst.

3. Verfahren nach Anspruch 1 oder 2, weiter umfassend die direkte oder indirekte Zugabe der wässrigen Mischung, die optional vor der Zugabe, während des Brauprozesses vor oder nach der Fermentationsphase, insbesondere der Würze, vor dem Kochen der Würze, oder während des Kochens der Würze, oder nach dem Kochen der Würze weiter verarbeitet wird.

4. Verfahren nach einem der Ansprüche 1 bis 3, wobei die wässrige Mischung während des Brauprozesses zugegeben wird, ohne vor der Zugabe während des Brauprozesses einem Ansäuerungsprozess bis zu einem pH-Wert von weniger als 5 unterzogen worden zu sein, vorzugsweise ohne irgendeinem Ansäuerungsschritt unterzogen worden zu sein.

5. Verfahren nach einem der Ansprüche 1 bis 4, wobei während des Brauprozesses zwischen 4 mg/l und 100 mg/l Würze der Iso-Alpha-Säuren, vorzugsweise der nicht fermentierten Würze, zugegeben werden.

6. Verfahren nach einem der Ansprüche 1 bis 4, wobei während des Brauprozesses zwischen 4 mg/l und 100 mg/l fermentiertes Getränk von Iso-Alpha-Säuren zugegeben werden.

7. Verfahren zur Isomerisierung von Alpha-Säuren, aus einer Alpha-Säuren enthaltenden Substanz, zu Iso-Alpha-Säuren, umfassend einen wässrigen Prozess unter Verwendung einer Art oder mehr als eine Art von Komplexen von Metallkationen, vorzugsweise Erdalkalimetallkationen, mit Ladung > + 1 und Chelatbildnern, ausgewählt aus der Gruppe von Aminosäuren, einschließlich Salze davon, wobei die Isomerisierung der Alpha-Säure in einem wässrigen Verarbeitungsmedium durchgeführt wird, umfassend mindestens 60 Vol.-% Wasseranteil des gesamten Lösungsmittelvolumens.

8. Verfahren nach einem der Ansprüche 1 bis 7, wobei der addierte Gehalt an Alpha-Säuren und Iso-Alpha-Säuren in dem wässrigen Verarbeitungsmedium für die Isomerisierung der Alpha-Säure mindestens 0,1 Gew.-% und vorzugsweise zwischen 0,5 Gew.-% und 40,0 Gew.-% beträgt.

9. Verfahren nach einem der Ansprüche 1 bis 8, wobei das Molverhältnis des Komplexes aus Metallkation und Chelatbildner, auf Metallbasis, zu (Alpha-Säure + Iso-Alpha-Säure) im wässrigen Verarbeitungsmedium für die Isomerisierung der Alpha-Säure zwischen 20 : 1 und 1 : 20 liegt.

10. Verfahren nach einem der Ansprüche 1 bis 9, wobei das Molverhältnis von Metallkation zu Chelatbildner in dem wässrigen Verarbeitungsmedium für die Isomerisierung der Alpha-Säure zwischen 20 : 1 und 1 : 20 liegt.

11. Verfahren nach einem der Ansprüche 1 bis 10, wobei die Verarbeitungstemperatur für den Prozess der Isomerisierung der Alpha-Säure im Bereich von 323 K bis 368 K liegt und wobei die Verarbeitungszeit für den Prozess der Isomerisierung der Alpha-Säure im Bereich von 1 Min. bis 120 Min. liegt.

12. Verfahren nach einem der Ansprüche 1 bis 5 und 7 bis 11, umfassend die direkte oder indirekte Zugabe einer Art oder mehr als einer Art von Komplexen von Metallkationen und Chelatbildnern zur Würze.

13. Verfahren nach einem der vorhergehenden Ansprüche, wobei das Metallkation mit einer Ladung > +1 ausgewählt ist aus der Gruppebestehend aus Magnesiumkationen, Calciumkationen, Strontiumkationen, Bariumkationen, Eisenkationen, Kupferkationen, Aluminiumkationen, Mangankationen und Zinkkationen.

14. Verfahren nach Anspruch 13, wobei das Metallkation Mg²⁺ ist.

15. Verfahren nach einem der Ansprüche 1 bis 14, wobei Glycin als Chelatbildner verwendet wird.

16. Verfahren nach einem der Ansprüche 1 bis 14, wobei Glycinat, insbesondere Kaliumglycinat, als Chelatbildner verwendet wird.

17. Verfahren nach einem der Ansprüche 1 bis 14, wobei eine L-Aminosäure als Chelatbildner verwendet wird, insbesondere L-Lysin.

18. Verfahren nach einem der Ansprüche 1 bis 17, wobei die Alpha-Säuren enthaltende Substanz, umfassend Alpha-Säuren in der freien Säureform oder als Alkalimetallsalze oder Kombinationen davon, ausgewählt ist aus der Gruppe bestehend aus Hopfenzapfen, Rohhopfen, getrocknetem Hopfen, Ballenhopfen, gemahlenem Hopfen, Hopfenpulver, Hopfenpellets, Hopfenextrakten, Alpha-Säuren und Beta-Säuren enthaltenden Hopfenextrakten, Hopfenextrakten, enthaltend neben Alpha-Säuren auch Hopfenöle, gereinigten Alpha-Säureextrakten, Säurekonzentraten und wässrigen Lösungen, umfassend Alpha-Säuren.

19. Verfahren nach einem der Ansprüche 1 bis 18, wobei die Alpha-Säuren enthaltende Substanz dem wässrigen Verarbeitungsmedium zur Isomerisierung der Alpha-Säure nicht als organische Lösungsmittellösung, umfassend Alpha-Säuren, zugegeben wird.

20. Verfahren nach den Ansprüchen 1 bis 19, wobei der Prozess der Isomerisierung der wässrigen Alpha-Säure in einem Rührkesselreaktor durchgeführt wird.

21. Verfahren nach den Ansprüchen 1 bis 19, wobei der Prozess der Isomerisierung der wässrigen Alpha-Säure in einem Pumpenflußreaktor durchgeführt wird.

22. Verfahren nach den Ansprüchen 1-21, umfassend die direkte oder indirekte Zugabe von Alkalimetallsubstanzen zu dem wässrigen Verarbeitungsmedium.

## Revendications

1. Procédé de préparation d'une boisson brassée, en particulier d'une bière, comportant un traitement, conduit en milieu aqueux, d'isomérisation d'acides alpha en acides iso-alpha, réalisé à partir d'une matière contenant des acides alpha, séparée du moût bouillant dans la chaudière de brasserie, et au moyen de complexes de cations de métal d'un type ou de plusieurs types, de préférence des cations de métaux alcalino-terreux, de charge supérieure à +1, et d'agents chélatants choisis dans l'ensemble des acides aminés, y compris leurs sels, étant entendu que le milieu aqueux de traitement dans lequel est effectuée l'isomérisation d'acides alpha comprend de l'eau en une fraction volumique d'au moins 60 % du volume total de solvant, et qu'on prépare ainsi un mélange aqueux comprenant des acides iso-alpha, à ajouter au cours du processus de brassage.

2. Procédé conforme à la revendication 1, dans lequel ledit milieu aqueux de traitement comprend de l'eau en une fraction volumique d'au moins 95 % du volume total de solvant.

3. Procédé conforme à la revendication 1 ou 2, qui comporte en outre le fait d'ajouter directement ou indirectement ledit mélange aqueux, en option traité encore avant addition, au cours du processus de brassage avant ou après l'étape de fermentation, et en particulier au moût, avant, pendant ou après la cuisson du moût par ébullition.

4. Procédé conforme à l'une des revendications 1 à 3, dans lequel ledit mélange aqueux est ajouté au cours du processus de brassage sans avoir subi une étape d'acidification à un pH inférieur à 5 avant son addition au cours du processus de brassage, et de préférence, sans avoir subi aucune étape d'acidification.

5. Procédé conforme à l'une des revendications 1 à 4, dans lequel on ajoute au cours du processus de brassage, de préférence au moût non fermenté, entre 4 mg et 100 mg d'acides iso-alpha par litre de moût.

6. Procédé conforme à l'une des revendications 1 à 4, dans lequel on ajoute au cours du processus de brassage entre 4 mg et 100 mg d'acides iso-alpha par litre de boisson fermentée.

7. Procédé d'isomérisation d'acides alpha en acides iso-alpha à partir d'une matière contenant des acides alpha, comportant un traitement conduit en milieu aqueux et au moyen de complexes de cations de métal d'un type ou de plusieurs types, de préférence des cations de métaux alcalino-terreux, de charge supérieure à +1, et d'agents chélatants choisis dans l'ensemble des acides aminés, y compris leurs sels, dans lequel l'isomérisation d'acides alpha est effectuée dans un milieu aqueux de traitement comprenant de l'eau en une fraction volumique d'au moins 60 % du volume total de solvant.

8. Procédé conforme à l'une des revendications 1 à 7, dans lequel la somme des teneurs en acides alpha et acides iso-alpha du milieu aqueux de traitement d'isomérisation des acides alpha vaut au moins 0,1 % en poids, et de préférence, entre 0,5 % en poids et 40,0 % en poids.

9. Procédé conforme à l'une des revendications 1 à 8, dans lequel le rapport molaire du complexe de cation de métal et d'agent chélatant, évalué en métal, à l'ensemble des acides alpha et iso-alpha, dans le milieu aqueux de traitement d'isomérisation des acides alpha, vaut entre 20/1 et 1/20.

10. Procédé conforme à l'une des revendications 1 à 9, dans lequel le rapport molaire du cation de métal à l'agent chélatant, dans le milieu aqueux de traitement d'isomérisation des acides alpha, vaut entre 20/1 et 1/20.

11. Procédé conforme à l'une des revendications 1 à 10, dans lequel la température à laquelle est réalisé le traitement d'isomérisation des acides alpha se situe dans l'intervalle allant de 323 K à 368 K et la durée du traitement d'isomérisation des acides alpha se situe dans l'intervalle allant de 1 minute à 120 minutes.

12. Procédé conforme à l'une des revendications 1 à 5 et 7 à 11, qui comporte le fait d'ajouter au moût, directement ou indirectement, des complexes, d'un type ou de plusieurs types, de cations de métal et d'agents chélatants.

13. Procédé conforme à l'une des revendications précédentes, dans lequel le cation de métal, de charge supérieure à +1, est choisi dans l'ensemble formé par les cations de magnésium, de calcium, de strontium, de baryum, de fer, de cuivre, d'aluminium, de manganèse, et de zinc.

14. Procédé conforme à la revendication 13, dans lequel ledit cation de métal est Mg²⁺.

15. Procédé conforme à l'une des revendications 1 à 14, dans lequel on utilise de la glycine en tant qu'agent chélatant.

16. Procédé conforme à l'une des revendications 1 à 14, dans lequel on utilise un glycinate, en particulier du glycinate de potassium, en tant qu'agent chélatant.

17. Procédé conforme à l'une des revendications 1 à 14, dans lequel on utilise, en tant qu'agent chélatant, un acide aminé de la série L, en particulier de la L-Lysine.

18. Procédé conforme à l'une des revendications 1 à 17, dans lequel la matière contenant des acides alpha, comprenant des acides alpha sous forme d'acides libres ou de sels de métal alcalin, ou d'une combinaison de ces formes, est choisie dans l'ensemble formé par les matières suivantes : houblon en cônes, houblon brut, houblon séché, houblon en balles, houblon moulu, houblon en poudre, houblon en pastilles, extraits de houblon, extraits de houblon contenant acides alpha et acides bêta, extraits de houblon contenant aussi, à part des acides alpha, des huiles de houblon, extraits d'acides alpha purifiés, concentrés d'acides alpha, et solutions aqueuses contenant des acides alpha.

19. Procédé conforme à l'une des revendications 1 à 18, dans lequel la matière contenant des acides alpha n'est pas ajoutée au milieu aqueux de traitement d'isomérisation des acides alpha sous la forme de solution comprenant des acides alpha dans un solvant organique.

20. Procédé conforme à l'une des revendications 1 à 19, dans lequel le traitement d'isomérisation des acides alpha en milieu aqueux est réalisé dans un réacteur à cuve agitée.

21. Procédé conforme à l'une des revendications 1 à 19, dans lequel le traitement d'isomérisation des acides alpha en milieu aqueux est réalisé dans un réacteur à circulation par pompe.

22. Procédé conforme à l'une des revendications 1 à 21, qui comporte le fait d'ajouter directement ou indirectement au milieu aqueux de traitement des substances contenant un métal alcalin.
